# EUROPÄISCHE PATENTSCHRIFT

(11) **EP 2 276 629 B1**
(45) Veröffentlichungstag und Bekanntmachung des Hinweises auf die Patenterteilung: **28.03.2012**
(21) Anmeldenummer: 09782316.5
(22) Anmeldetag: 28.08.2009
(51) Int. Cl.: B32B 7/06, B41M 5/24

(54) **VERFAHREN ZUR HERSTELLUNG EINER MEHRSCHICHTIGEN FOLIE**
METHOD FOR PRODUCING A MULTI-LAYERED FILM
PROCÉDÉ DE FABRICATION D'UNE FEUILLE MULTICOUCHE

(30) Priorität: 09.09.2008 DE 102008046462
(43) Veröffentlichungstag der Anmeldung: 26.01.2011
(73) Patentinhaber: TESA SE, 20253 Hamburg (DE)
(72) Erfinder: SIEBERT, Michael, 22869 Schenefeld (DE); PREUß, Philipp, 49828 Neuenhaus (DE)
(86) Internationale Anmeldenummer: PCT/EP2009/061116
(87) Internationale Veröffentlichungsnummer: WO 2010/028960

(56) Entgegenhaltungen:
- EP-A1- 1 892 689
- DE-A1- 10 048 665
- DE-A1-102006 031 189

## Beschreibung

Die vorliegende Erfindung betrifft ein Verfahren zur Herstellung einer Folie gemäß dem Oberbegriff von Anspruch 1 sowie eine mehrschichtige Folie gemäß dem Oberbegriff von Anspruch 14.

Zur Kennzeichnung von Teilen an Fahrzeugen, Maschinen, elektrischen und elektronischen Geräten, Versandverpackungen usw. finden zunehmend technische Etiketten Verwendung, so zum Beispiel als Typenschilder, als Steueretiketten für Prozessabläufe, als Sicherheitsetiketten oder als Garantie- und Prüfplaketten.

Um derartige Schilder oder Etiketten zu beschriften, werden weit verbreitet leistungsfähige steuerbare Laser eingesetzt, mit deren Hilfe Markierungen wie Schriften, Codierungen und dergleichen erzeugt werden. An das zu beschriftende Material sind hohe Anforderungen gestellt. So soll die Beschriftung schnell erfolgen können, das Auflösungsvermögen soll hoch sein, die Anwendung soll einfach sein und das Material soll eine hohe Beständigkeit gegenüber mechanischen, physikalischen und chemischen Einflüssen haben. Gängige Materialien wie zum Beispiel bedrucktes Papier, eloxiertes oder lackiertes Aluminium oder PVC-Folien erfüllen nicht alle diese Anforderungen.

Ferner besteht in manchen Anwendungsfeldern der Wunsch nach einer Individualisierung der Etiketten, die bereits vor der Beschriftung vorhanden sein soll. Eine solche Individualisierung könnte zum Beispiel ein kundenspezifisches Design enthalten. Eine derartige kundenspezifische Individualisierung wird üblicherweise durch einfache Bedruckung des Etikettenmaterials erzielt. Eine solche Bedruckung hat den Nachteil, dass sie leicht nachgemacht werden kann, z.B. durch nachträgliche Bedruckung einer nichtindivulasierten Folie. Darüber hinaus ist sie gegenüber dem übrigen Etikettenmaterial erhaben, was wiederum dazu führt, dass für diese nur eine geringe Abriebfestigkeit aufweist.

Aus dem Stand der Technik (DE 101 42 638 A1) ist ein Etikett bekannt, das eine kundenspezifische Individualisierung aufweist, die in das Etikettenmaterial eingebettet ist, wodurch die Abriebbeständigkeit erhöht ist und zudem die Nachahmung des Materials erschwert ist. Zur Herstellung dieses Etiketts wird zunächst eine Prägeschicht teilflächig in Form eines kundenspezifisch individualisierten Musters auf eine Stützträgerfolie aufgedruckt. Bei der Prägeschicht handelt es sich um einen UV-härtbaren Drucklack, der unmittelbar nach dem Aufdrucken durch UV-Bestrahlung ausgehärtet wird. Sodann wird eine Zwischenschicht eines schwarzpigmentierten elektronenstrahlhärtbaren Polyurethanacrylatlacks als Gravierschicht vollflächig auf die Stützträgerfolie bzw. die teilflächige Gravierschicht aufgetragen. Auf diese Acrylatlackschicht wird sodann noch eine so genannte Basisschicht eines elektronenstrahlhärtbaren Lacks aufgerakelt. Beide Acrylatlackschichten werden sodann gemeinsam durch Bestrahlung mit Elektronen ausgehärtet. Anschließend wird die Stützträgerfolie dekaschiert, also von den Lackschichten entfernt, und der mehrschichtige Schichtaufbau bleibt als laserbeschriftbares Laseretikettenmaterial mit einer kundenspezifisch individualisierten geprägten Kennung zurück.

Diese aus dem Stand der Technik bekannte Folie genügt hohen Anforderungen, bietet jedoch zudem noch Entwicklungspotential hin zu weiteren Anwendungsmöglichkeiten.

Der vorliegenden Erfindung liegt damit das Problem zugrunde, ein Verfahren zur Herstellung einer laserbeschriftbaren Folie anzugeben, das einfach und kostengünstig durchführbar ist, sowie eine laserbeschriftbare Folie anzugeben, die vielfältig einsetzbar ist.

Die vorliegende Erfindung löst das zuvor genannte Problem bei einem Verfahren mit den Merkmalen des Oberbegriffs von Anspruch 1 durch die Merkmale des kennzeichnenden Teils von Anspruch 1. Eine entsprechende Folie wird in Anspruch 14 beschrieben. Bevorzugte Ausgestaltungen und Weiterbildungen sind Gegenstand der jeweiligen Unteransprüche. Die Lehre der Erfindung beruht zunächst auf der grundlegenden Erkenntnis, dass es möglich ist, nicht nur eine einzelne Drucklackschicht auf ein Trägermaterial aufzubringen, sondern auch mehrere teilw. partiellen Drucklackschichten übereinander, jeweils unabhängig voneinander. Nach der Bedruckung kann der Träger vom Druckschichtverbund prozessstabil dekaschiert werden kann. Bei dem Träger, auf den die Drucklackschichten aufgebracht werden, handelt es sich also um eine Stützträgerfolie, die nach dem Aufbringen und Aushärten der Drucklackschichten wieder entfernt wird. Dies ist insbesondere dann vorteilhaft, wenn die aus den Drucklackschichten gebildete Folie selbsttragend ausgebildet wird, also ein zusätzlicher Träger nicht vorgesehen ist. Alternativ oder ergänzend kann aber auch ein zusätzlicher permanenter Träger in dem Folienaufbau vorgesehen werden.

Diese Möglichkeit wurde bislang nicht erkannt, da der Auftrag mehrerer Drucklackschichten - insbesondere von partiellen Drucklackschichten - eine präzise Abstimmung des Druckverfahrens hinsichtlich jeder Drucklackschicht erfordert um sicherzustellen, dass die Oberfläche des Drucklackschichtsystems auf der Seite des Trägers vollständig glatt ist und die Verankerung dieser Oberfläche mit dem Träger wohldefiniert ist, so dass der Träger stets ohne Folienrisse von der Drucklackschicht entfernt werden kann.

Die Drucklackschichten bieten gegenüber anderen Lackschichten und auch gegenüber Laminatschichten den Vorteil, dass sie relativ dünn aufgetragen werden können. Dies führt zu der Möglichkeit einer schnelleren Laserbeschriftung, da eine dünnere Schicht aufgrund des geringeren Masseabtrags bei der Laserbeschriftung schneller beschriftet werden kann. Insbesondere werden Drucklackschichten nämlich mit einer Schichtdicke von etwa 1 µm bis etwa 5 µm aufgetragen, wohingegen die Schichtdicke von ESH-Acrylatlackschichten üblicherweise mindestens 8 µm beträgt.

Zusammenfassend wurde erkannt, dass es möglich ist, trotz des zunächst unverhältnismäßig erscheinenden Aufwandes ein Logo nicht nur in einen elektronenstrahlhärtenden Lack einzubetten, sondern auch in einen UV-härtbaren Drucklack. Es hat sich gezeigt, dass durch eine geeignete, schichtabhängige Anpassung der Rasterwalzen, der Druckgeschwindigkeit, der UV-Dosis und des verwendeten Drucklacks ein prozessstabiler Farbauftrag auch mittels Drucktechnik erzielt werden kann, Insbesondere kann die Folie somit farbliche Kennzeichnungen an ihrer Oberfläche enthalten, die eine sehr hohe Beständigkeit aufweisen und ausschließlich während der Fertigung des Folienverbundes eingebracht werden können und damit eine sehr hohe Schutzfunktion gegen Nachahmung bieten.

Erfindungsgemäß wird bei dem Verfahren zur Herstellung einer mehrschichtigen Folie eine Gravierschicht partiell aufgedruckt. Als Gravierschicht wird insbesondere eine Schicht bezeichnet, in die mittels Laserbestrahlung eine Kennzeichnung einbringbar ist, beispielsweise durch lokales Entfernen der Gravierschicht, eine lokale Änderung der optischen Eigenschaften (beispielsweise Reflektion, Transmission, Farbe) oder ähnliches. Aber auch beliebige andere auf Drucklack basierende Schichten werden als Gravierschicht bezeichnet.

Das Aufdrucken der partiellen Gravierschicht erfolgt auf eine Stützträgerfolie, die nach Herstellung der laserbeschriftbaren Folie wieder dekaschiert wird. Die partielle Gravierschicht wird dabei aus einem UV-härtbaren Drucklack ausgebildet. Das partielle Aufdrucken erfolgt insbesondere in Form eines kundenspezifisch ausgewählten Musters, wie zum Beispiel in Form eines Logos oder ähnlichem.

Oberhalb der partiellen Gravierschicht wird dann eine Deckschicht aufgebracht, die wiederum aus einem UV-härtbaren Drucklack ausgebildet und aufgedruckt wird. Als Drucklack wird hier jegliche Druckfarbe, unabhängig ob transparent oder farbig, bezeichnet. Wesentlich ist dabei, dass die Aufbringung durch Drucktechnik, vorzugsweise im Flexodruck, erfolgt.

Insbesondere wird diese Deckschicht vollflächig aufgebracht, so dass sie die partielle Gravierschicht sowie den darunter liegenden Träger vollständig überdeckt. Sofern keine weitere Zwischenschicht zwischen der Gravierschicht und der Deckschicht vorgesehen ist, ist die partielle Gravierschicht somit vollständig in die Deckschicht eingebettet. Sofern zwischen der Deckschicht und der partiellen Gravierschicht eine vollflächige Zwischenschicht vorgesehen ist, erfolgt die Einbettung der Gravierschicht in dieser vollflächigen Zwischenschicht. Insbesondere kann es sich bei einer derartigen vollflächigen Zwischenschicht um eine Metallglanzschicht handeln, also eine Schicht, die metallischen Glanz aufweist. In eine derartige Schicht sind insbesondere Metallglanzpigmente eingemischt, wie dies in der parallelen Patentanmeldung der Anmelderin beschrieben ist. Als Metallglanzpigmente kommen insbesondere Aluminiumpulver, Bronzepulver, Perlglanzpigmente, Goldpulver, Silberpulver und/oder Kupferpulver in Frage.

In bevorzugter Ausgestaltung wird die laserbeschriftbare Folie mit einem Träger ausgebildet. Hierfür kann beispielsweise eine Folie auf die Deckschicht aufkaschiert werden, es kann aber auch eine vollflächige Trägerschicht aus einem elektronenstrahlhärtenden Acrylatlack auf die Deckschicht aufgebracht werden.

Etwaige Schichtdickenschwankungen des Drucklackverbunds, wie sie z.B. durch das Überdrucken einer partiellen Gravierschicht entstehen, treten nur auf der vom Stützträger abgewandeten Seite auf. System- und Herstellbedingt liegt nach dem Dekaschieren des Prozessliners auf der freigelegten Seite stets eine sehr glatte Oberfläche ohne Stufen oder Kanten zwischen unterschiedlichen Gravierschichten vor, womit eine sehr hohe Oberflächenbeständigkeit erreicht werden kann. Gleichzeitig wird durch den Dekaschierprozess sichergestellt, dass ein derartiger Schichtaufbau in Kombination mit einer derartigen Oberflächenbeschaffenheit nicht durch nachträgliche Manipulation einer Folie erhalten werden kann.

Die auf der gegenüberliegenden Seite auftretenden Schichtdickenschwankungen können z.B. durch die nachträgliche Rakelbeschichtung mit einem Acrylatlack oder einer hinreichend dicken Klebmasse kompensiert werden.

Eine inverse Gravierschicht die ebenfalls aus einem UV-härtbaren Drucklack ausgebildet ist wird partiell im Wesentlichen passgenau mit einem zur Gravierschicht inversen Muster aufgedruckt. Die beiden UV-härtbaren Drucklacke sind dabei insbesondere verschiedenfarbig zueinander, aber auch verschiedenfarbig zu der Deckschicht ausgebildet, um einen möglichst großen Farbkontrast zu ermöglichen. Eine gleichfarbige Ausgestaltung der beiden Drucklacke ist hingegen bevorzugt, wenn in einem der Lacke zusätzliche Pigmente, z.B. UV-Fluoreszenz-Pigmente, eingearbeitet sind. Die unterschiedliche Ausbildung ist dann nur unter bestimmten Bedingungen sichtbar, so dass somit eine versteckte Kennzeichnung erzielt werden kann.

Hinsichtlich der Gravierschicht und/oder der inversen Gravierschicht kann vorgesehen sein, dass diese aus mehreren Schichten UV-härtbarer Drucklacke ausgebildet wird. Dies ist insbesondere dann von Vorteil, wenn bereits das Muster mehrfarbig ausgebildet sein soll oder mehrfarbig beschriftet werden soll.

Die partielle Gravierschicht und die inverse Gravierschicht bzw. bei einer mehrschichtigen Ausgestaltung die entsprechenden Schichtfolgen werden dazu mit einer im Wesentlichen übereinstimmenden Schichtdicke aufgebracht. Die vollflächige Deckschicht weist dann auch eine im Wesentlichen gleich bleibende Schichtdicke auf. Dies ist insbesondere im Hinblick auf eine einfache Laserbeschriftung vorteilhaft, da bei der Beschriftung der Deckschicht somit keine Anpassung der Laserparameter an unterschiedliche Schichtdicken erfolgen muss. Außerdem kann dadurch erreicht werden, dass auch die Oberfläche auf der dem Prozessliner entfernt liegenden Seite keine Wölbungen oder Stufen aufweist.

Weiter kann vorgesehen werden, dass oberhalb der Deckschicht weitere Drucklackschichten aufgebracht werden, die insbesondere aus verschiedenfarbigen UV-härtbaren Drucklacken ausgebildet werden. Dies ist insbesondere hinsichtlich der Möglichkeit einer mehrfarbigen Beschriftung vorteilhaft. Diese weiteren Drucklackschichten werden bevorzugt vollflächig ausgebildet. In weiter bevorzugter Ausgestaltung wird die Stützträgerfolie zunächst mit einer insbesondere transparenten Drucklackschicht vollflächig bedruckt. Die partielle Gravierschicht wird sodann auf die Drucklackschicht aufgedruckt und darüber die vollflächige Deckschicht aufgebracht.

In bevorzugter Ausgestaltung werden die Drucklackschichten jeweils unmittelbar übereinander angeordnet, d.h. es sind keine weiteren Zwischenschichten vorgesehen. Dies ist insbesondere im Hinblick auf eine möglichst dünne sowie kostengünstige Ausgestaltung der Folie besonders vorteilhaft.

In einer weiter bevorzugten Ausgestaltung wird die Gravierschicht und/oder eine inverse Gravierschicht mit einem weiteren Sicherheitselement versehen. Bei einem derartigen Sicherheitselement kann es sich beispielsweise um UV-fluoreszierende Pigmente handeln, die in den Drucklack eingemischt werden. Der Drucklack selbst wird in diesem Fall insbesondere transparent ausgebildet.

Dem Drucklack der Deckschicht und/oder dem Drucklack der Drucklackschichten werden insbesondere Laserabsorber beigemischt, um eine gute Beschriftbarkeit mittels Laserstrahlung zu erzielen. Als Laserabsorber werden insbesondere Titandioxid und/oder Ruß beigemischt. Beide Additive zeichnen sich als gute Laserabsorber aus. Zudem zeichnen diese beiden Additive durch eine gute Verträglichkeit mit den anderen Bestandteilen von Drucklacken aus. Durch die Zugabe von Titandioxid und/oder Ruß als Laserabsorbern ist es zudem möglich, einen Drucklack beliebiger Farbe zu verwenden. Das eigentliche farbgebende Pigment des Drucklacks braucht bezüglich der Laserabsorption keine besonderen Absorptionseigenschaften mehr zu erfüllen. Insbesondere kann somit eine laserbeschriftbare Drucklackschicht als gelbe Drucklackschicht ausgebildet werden. Dies war in der Vergangenheit mit anderen Systemen nicht oder nur mit sehr großem Aufwand möglich.

Als besonders vorteilhaft hat sich für das Additiv Titandioxid ein Anteil von mindestens 5 %, vorzugsweise von mindestens 10 % herausgestellt. Hinsichtlich des Ruß haben sich Anteile von mindestens 2 %, vorzugsweise von mindestens 4 % als optimal herausgestellt.

Bei einer Drucklackschicht handelt es sich bevorzugt somit auch um eine Gravierschicht, d.h. in die Drucklackschicht ist zudem mittels Laserbestrahlung eine Kennzeichnung einbringbar, beispielsweise durch lokales Entfernen der Gravurschicht, eine lokale Änderung der optischen Eigenschaften (beispielsweise Reflektion, Transmission, Farbe) oder ähnliches. Eine Drucklackschicht kann aber auch ohne Laserabsorber, beispielsweise als transparente Schicht ausgebildet sein. In diesem Fall sollte jedoch unterhalb eine Drucklackschicht als Gravierschicht ausgebildet sein, um eine Laserbeschriftung zu ermöglichen.

Um einerseits einen ausreichenden Farbkontrast zu erzielen und andererseits eine möglichst hohe Beschriftungseffizienz zu ermöglichen, sollte insbesondere die partielle Gravierschicht, bevorzugt aber auch die weiteren Drucklackschichten, eine Schichtdicke zwischen etwa 0,5 µm und etwa 10 µm, vorzugsweise zwischen etwa 1 µm und etwa 5 µm aufweisen.

Ferner ist in bevorzugter Ausgestaltung vorgesehen, dass jede Drucklackschicht vor der Bedruckung durch die nächste Drucklackschicht ausgehärtet wird. Dadurch kann sichergestellt werden, dass eine Durchmischung der einzelnen Drucklackschichten und damit eine Durchmischung der jeweiligen Farben vermieden wird. Das Aushärten der einzelnen Drucklackschichten erfolgt insbesondere durch UV-Bestrahlung.

Die Schichtdicke des Trägers, beträgt vorzugsweise zwischen etwa 50 µm und etwa 200 µm. Als Träger kommen grundsätzlich alle Folien und Folienverbundsysteme in Frage. Insbesondere eignen sich beispielsweise Polymerfolien wie Polyethylenfolie, PVC-Folie oder dergleichen. Hinsichtlich des Trägers sollte lediglich eine gute Haftung der Drucklackschicht auf diesem gewährleistet sein. Gegebenenfalls kann dies durch das Aufbringen eines zusätzlichen Haftvermittlers erfolgen, wie es aus dem Stand der Technik bekannt ist.

In besonders bevorzugter Ausgestaltung wird die laserbeschriftbare Folie als Klebefolie, insbesondere als selbstklebende Klebefolie ausgebildet, indem eine Klebeschicht aufgebracht wird. Die Klebeschicht kann auf beliebigen Klebmassen basieren, wie sie aus dem Stand der Technik bekannt sind, insbesondere auf so genannten Haftklebmassen oder hitzeaktivierbaren Klebemassen. Sofern die laserbeschriftbare Folie einen permanenten Träger aufweist, so wird die Klebeschicht aus Gründen einer einfachen Herstellung bevorzugt auf der den Drucklackschichten gegenüber liegenden Seite des Trägers aufgebracht. Alternativ kann die Klebeschicht aber auch auf der obersten Lackschicht aufgebracht werden. In diesem Fall sollte der Träger jedoch transparent ausgebildet sein, damit die Beschriftung durch den Träger hindurch lesbar ist. Diese Anordnung hat den Vorteil, dass ein Ablösen der Folie nach dem Verkleben ohne einen Bruch der Lackschichten und damit einer dort eingeschriebenen Kennung nicht möglich ist. Die Drucklackschichten können nämlich sehr brüchig eingestellt werden und können damit ohne Hilfe eines Trägers nach einer Verklebung nicht beschädigungsfrei abgelöst werden. Da der Träger aber oberhalb der Lackschichten angeordnet ist, werden die Drucklackschichten bei einem Manipulationsversuch beschädigt.

Weitere Einzelheiten, Ziele, Merkmale und Vorteile der vorliegenden Erfindung werden nachfolgend anhand eines Ausführungsbeispiels näher erläutert. In der Zeichnung zeigt
- Fig. 1: einen schematischen Längsschnitt durch eine laserbeschriftbare Folie,
- Fig. 2: eine Draufsicht auf ein beschriftete Etikett gemäß der Ausgestaltung aus Fig. 1,
- Fig. 3: einen schematischen Längsschnitt durch ine gemäß einer Ausführungsform des erfindungsgemäßen Verfahrens hergestellte laserbeschriftbare Folie.

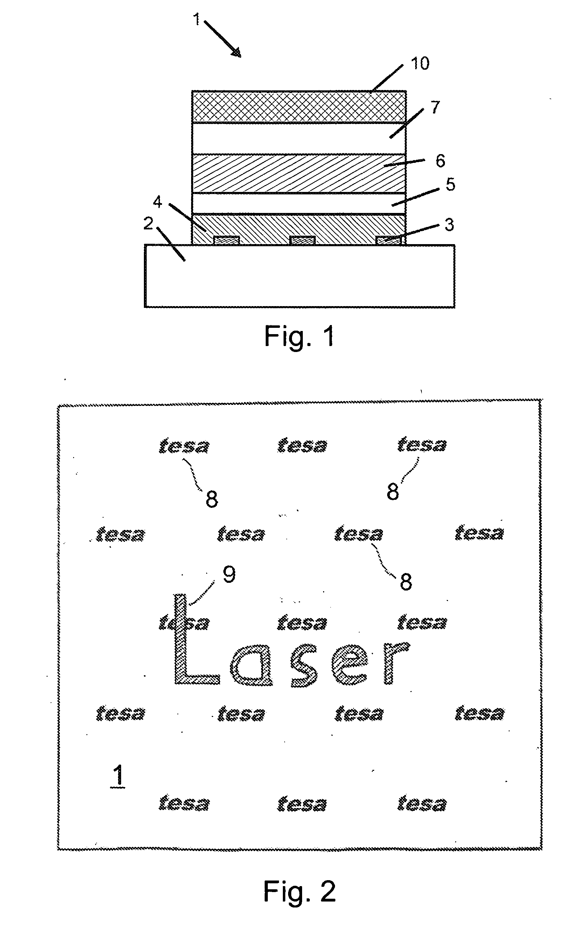

In Fig. 1 ist dargestellt, wie eine laserbeschriftbare Folie 1 hergestellt wird. Als Stützträgerfolie 2, wird vorliegend eine Polyesterfolie mit einer Dicke von 50 µm verwendet. Auf die Stützträgerfolie 2 wird ein UV-härtbarer Drucklack partiell in Form eines Musters oder dgl., hier nämlich wiederholt in Form eines Schriftzuges "tesa" mittels eines Flexodruckverfahrens aufgedruckt. Der Drucklack wird sodann durch UV-Bestrahlung ausgehärtet und bildet die partielle Gravierschicht 3 aus.

Die partielle Gravierschicht 3 sowie die frei gebliebenen Bereiche der Stützträgerfolie 2 werden anschließend mit einem weiteren UV-härtbaren Drucklack vollflächig überdruckt, so dass sich eine Deckschicht 4 ausbildet. Auch diese Schicht wird mittels UV-Bestrahlung ausgehärtet. Hier und vorzugsweise folgt dann noch eine weitere, insbesondere vollflächige, Drucklackschicht 5 eines UV-härtbaren Drucklackes, die wiederum für sich ausgehärtet wird.

Auf die Drucklackschicht 5 wird anschließend noch ein Träger 6 aufgebracht. Vorliegend handelt es sich dabei um einen ESH-härtbaren Acrylatlack mit einer Schichtdicke von etwa 80 µm. Alternativ sind aber auch andere Träger einsetzbar, beispielsweise Polymerfolien, basierend auf Polyethylen, Polyvinylchlorid, Polypropylen etc. Vorliegend ist der Träger 6 im Wendprodukt an der Unterseite (abgesehen von einer Klebeschicht 7) angeordnet und ist hier weiß ausgebildet.

Auf den Träger 6 ist sodann eine Klebeschicht 7 aufgebracht, bei der es sich bevorzugt um eine Klebeschicht 7 basierend auf einer Haftklebemasse handelt, die also bereits bei Raumtemperatur klebrig ist. Die Klebeschicht weist vorliegend eine Schichtdicke von etwa 30 µm auf.

Die Klebeschicht 7 ist vorliegend noch mit einem Trennschicht 10 abgedeckt, das üblicherweise erst unmittelbar vor der Applikation der Folie 1 auf einem Gegenstand entfernt wird. Die Trennschicht 10 dient dem Schutz der Klebeschicht 7 vor Applikation. Als Trennschicht 10 eignen sich grundsätzlich alle Flächengebilde mit niedriger Adhäsion, wie zum Beispiel silikonisierte Papiere oder dgl.

Die Drucklackschichten 3, 4, 5 sind jeweils als Gravierschichten ausgebildet, also als Schichten, die mittels Laserbestrahlung lokal veränderbar sind, insbesondere lokal entfernbar. Hierzu weisen die Drucklackschichten jeweils Laserabsorber auf, um eine möglichst hohe Empfindlichkeit gegenüber Laserbestrahlung bereitzustellen und damit eine schnelle Beschriftung zu ermöglichen. Vorliegend sind den Drucklacken als Laserabsorber sowohl Titandioxid als auch Ruß beigemischt, da sich diese Kombination als besonders vorteilhaft erwiesen hat. Der Anteil von Titandioxid beträgt dabei bevorzugt mindestens etwa beträgt dabei bevorzugt mindestens beträgt dabei bevorzugt mindestens 5 %, weiter bevorzugt mindestens etwa 10 %. Der Anteil von Ruß beträgt bevorzugt mindestens etwa 2 %, weiter bevorzugt mindestens etwa 4 %. Die jeweiligen Anteile in den Drucklackschichten können sich voneinander unterscheiden; diese werden in Abhängigkeit von weiteren Bestandteilen der Drucklackschichten (farbgebende Pigmente, Bindemittel etc.), vorgesehener Schichtdicke etc. festgelegt, um eine möglichst effiziente Beschriftung zu ermöglichen.

Die Schichtdicke der partiellen Gravierschicht 3 liegt bevorzugt im Bereich zwischen etwa 0,5 µm und etwa 5 µm. Sie beträgt vorliegend etwa 1 µm. Die Schichtdicke der Deckschicht 4 hingegen sollte so groß sein, dass die partielle Gravierschicht 3 darin eingebettet ist. Ihre maximale Schichtdicke sollte grundsätzlich zwischen etwa 1 µm und etwa 10 µm betragen. Vorliegend beträgt die Schichtdicke oberhalb der partiellen Gravierschicht etwa 2 µm und auf der Stützträgerfolie 2 etwa 3 µm. Die Schichtdicke der Drucklackschicht 5 wiederum liegt bevorzugt im Bereich zwischen etwa 1 µm und etwa 5 µm. Sie beträgt vorliegend etwa 4 µm.

Die partielle Gravierschicht 3 und die Deckschicht 4 sollten verschiedenfarbig ausgebildet sein, so dass das Muster, hier in Form des Schriftzuges "tesa", deutlich hervortritt. In der in Fig. 1 gezeigten laserbeschriftbaren Folie 1 ist die partielle Gravierschicht 3 in schwarz ausgebildet, der Drucklack enthält also schwarze Farbpigmente. Die Deckschicht 4 hingegen ist rot ausgebildet, der Drucklack enthält rote Farbpigmente, so dass diese einen deutlichen Kontrast zu der partiellen Gravierschicht 3 bildet. Die Drucklackschicht 5 wiederum enthält gelbe Farbpigmente und bildet eine gelbe Schicht aus, zu der auch der weiße Träger 6 wiederum einen guten Kontrast bildet. Je nach Wunsch kann durch eine Laserbeschriftung, vorliegend durch ein lokales Abtragen der jeweiligen Schicht oder Schichten durch Laserbestrahlung, eine mehrfarbige Beschriftung erzielt werden.

Aus der Folie 1 werden sodann Etiketten geschnitten oder gestanzt, die dann - vor oder nach einer Laserbeschriftung - auf dem zu kennzeichnenden Gegenstand verklebt werden können. Bevorzugt erfolgt das Schneiden der Laseretiketten mittels Laser, insbesondere mittels desselben Lasers, der auch zur Laserbeschriftung verwendet wird. Schneiden und Beschriften können dann in einem gemeinsamen Verfahrensschritt vorgenommen werden. Insbesondere kann dabei auch eine Korrelation der Form des Etiketts mit den Inhalt der Beschriftung erfolgen. Information kann beispielsweise durch eine oder mehrere Einkerbungen am Etikettenrand mit gleicher und/oder unterschiedlicher Breite analog einem Barcode oder ähnlichem in der Form des Etiketts hinterlegt werden. Zudem wird Information durch die Beschriftung hinterlegt. Diese beiden Informationen können dahingehend korreliert werden, dass Information teilweise oder vollständig ggf. verschlüsselt wiederholt wird. Alternativ kann die Korrelation auch darin bestehen, dass sich die beiden Informationen gemeinsam erst zu einer vollständigen Information ergänzen.

Fig. 2 zeigt eine Draufsicht auf ein Etikett 1, dass aus der zuvor beschrieben Folie geschnitten und bereits beschriftet wurde. Deutlich zu erkennen ist das durch die partielle Gravierschicht 3 gebildete Muster 8 in Form des Schriftzuges "tesa". Ferner ist eine Beschriftung 9 in Form des Schriftzuges "Laser" zu erkennen, hier nur in schwarz weiß gezeigt. Diese Beschriftung kann nun, je nachdem wie die Laserbeschriftung erfolgte, ein- oder mehrfarbig sein, insbesondere nämlich die Farben gelb und weiß, bzw. partiell unterhalb der Gravierschicht 3, rot, zeigen. Auch wird aus dieser Darstellung deutlich, dass die partielle Gravierschicht 3, die Beschriftung nicht stört, diese vielmehr durch die partielle Gravierschicht 3 hindurch erfolgen kann.

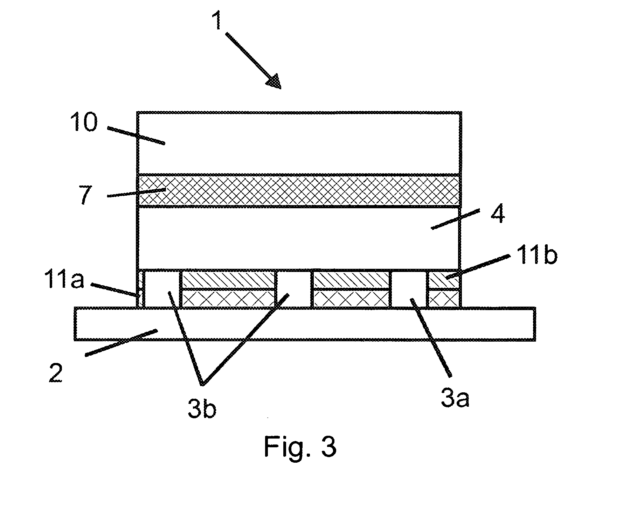

Fig. 3 zeigt einen schematischen Längsschnitt einer alternativen Ausgestaltung einer laserbeschriftbaren Folie 1. Vorliegend ist die Anordnung auf der Stützträgerfolie 2 gezeigt.

Die partielle Gravierschicht 3, die hier auf den Stützträger 2 aufgebracht ist, ist hier verschiedenfarbig vorgesehen, nämlich durch eine erste partielle Gravierschicht 3a, die durch einen gelben Drucklack gebildet ist, und eine zweite partielle Gravierschicht 3b, die durch einen roten Drucklack gebildet ist. Damit ist das durch die Gravierschicht 3 gebildete Muster bereist mehrfarbig, hier nämlich zweifarbig ausgebildet.

Sodann ist in den Zwischenräumen der partiellen Gravierschicht 3 eine inverse Gravierschicht 11 vorgesehen. Die inverse Gravierschicht 11 wird aus zwei übereinander aufgebrachten, verschiedenfarbigen UV-härtbaren Drucklacken ausgebildet, nämlich aus einer schwarzen Drucklackschicht 11a und einer weißen Drucklackschicht 11b. Die Gravierschicht 3 und die inverse Gravierschicht 11 weisen in etwa die gleiche Schichtdicke auf, vorliegend nämlich etwa 5 µm.

Oberhalb der Gravierschicht 3 und der inversen Gravierschicht 11 ist auch vorliegend eine vollflächige Deckschicht 4 eines UV-härtbaren Drucklackes vorgesehen. Diese Schicht ist grün ausgebildet, ermöglicht also einen weiteren Farbeffekt bei der Laserbeschriftung.

Auf der Deckschicht 4 schließen sich dann wieder eine Klebeschicht 7 sowie eine Trennschicht 10 an.

## Patentansprüche

1. Verfahren zur Herstellung einer mehrschichtigen, laserbeschriftbaren Folie (1), bei dem eine Gravierschicht (3) partiell auf eine Stützträgerfolie (2) aufgedruckt wird, wobei die Gravierschicht (3) aus einem UV-härtbaren Drucklack ausgebildet wird,
bei dem eine Deckschicht (4) vollflächig oberhalb der partiellen Gravierschicht (3), insbesondere unmittelbar auf der partiellen Gravierschicht (3), aufgebracht wird, wobei die Deckschicht (4) aus einem UV-härtbaren Drucklack ausgebildet und oberhalb der Gravierschicht (3) aufgedruckt wird,
**dadurch gekennzeichnet,**
**dass** eine inverse Gravierschicht (11) passgenau mit einem zur Gravierschicht (3) inversen Muster, insbesondere auf die Stützträgerfolie (2), aufgedruckt wird, wobei die inverse Gravierschicht (11) aus einem UV-härtbaren Drucklack ausgebildet wird und wobei die Gravierschicht (3) und die inverse Gravierschicht (11) mit einer im Wesentlichen übereinstimmenden Schichtdicke aufgebracht werden.

2. Verfahren nach Anspruch 1, **dadurch gekennzeichnet, dass** oberhalb der Deckschicht (4) ein Träger (6), basierend auf einer vollflächigen Trägerschicht aus einem ESH-härtenden Acrylatlack, aufgebracht wird.

3. Verfahren nach einem der vorhergehenden Ansprüche, **dadurch gekennzeichnet, dass** die Gravierschicht (3) und/oder die inverse Gravierschicht (11) aus mehreren Schichten UV-härtbarer Drucklacke ausgebildet werden.

4. Verfahren nach einem der vorhergehenden Ansprüche, **dadurch gekennzeichnet, dass** oberhalb der Deckschicht (4) eine oder mehrere weitere Drucklackschichten aufgedruckt werden, wobei diese Drucklackschichten aus einem UV-härtbaren Drucklack ausgebildet werden, vorzugsweise,
dass diese Drucklackschichten unterhalb einer Trägerschicht (6) angeordnet werden.

5. Verfahren nach Anspruch 4, **dadurch gekennzeichnet, dass** die weiteren Drucklackschichten vollflächig oder partiell ausgebildet werden.

6. Verfahren nach einem der vorhergehenden Ansprüche, **dadurch gekennzeichnet, dass** die Stützträgerfolie (2) vollflächig mit einer Drucklackschicht bedruckt wird und dass die partielle Gravierschicht (11) auf diese Drucklackschicht aufgedruckt wird.

7. Verfahren nach einem der vorhergehenden Ansprüche, **dadurch gekennzeichnet, dass** die Stützträgerfolie (2) oder eine Drucklackschicht mit einer Metallglanzschicht bedruckt wird und dass die Gravierschicht auf die Metallglanzschicht aufgedruckt wird.

8. Verfahren nach einem der vorhergehenden Ansprüche, **dadurch gekennzeichnet, dass** eine oder mehrere, vorzugsweise alle, Drucklackschichten mit einer Dicke zwischen etwa 0,5 µm und etwa 10 µm, vorzugsweise zwischen etwa 1 µm und etwa 5 µm, aufgebracht werden.

9. Verfahren nach einem der vorhergehenden Ansprüche, **dadurch gekennzeichnet, dass** die partielle Gravierschicht (3) mit einer Dicke zwischen etwa 0,5 µm und etwa 5 µm aufgebracht wird.

10. Verfahren nach einem der vorhergehenden Ansprüche, **dadurch gekennzeichnet, dass** die partielle Gravierschicht (3) und/oder eine inverse Gravierschicht (11) mit einem Sicherheitselement, insbesondere mit UV-fluoreszierenden Pigmenten, versehen wird.

11. Verfahren nach einem der vorhergehenden Ansprüche, **dadurch gekennzeichnet, dass** dem Drucklack der Deckschicht und/oder dem Drucklack der Drucklackschicht Laserabsorber, insbesondere TiO₂ und/oder Ruß, beigemischt werden.

12. Verfahren nach einem der vorhergehenden Ansprüche, **dadurch gekennzeichnet, dass** die Deckschicht (4) mit einer Dicke zwischen etwa 1 µm und etwa 10 µm, vorzugsweise zwischen etwa 1 µm und etwa 5 µm, aufgebracht wird.

13. Verfahren nach einem der vorhergehenden Ansprüche, **dadurch gekennzeichnet, dass** die Trägerschicht (6) mit einer Dicke zwischen etwa 50 µm und etwa 200 µm ausgebildet wird.

14. Mehrschichtige, laserbeschriftbare Folie (1) erhältlich nach einem Verfahren gemäß einem der vorhergehenden Ansprüche.

## Claims

1. Process for producing a multilayer, laser-inscribable film (1), by partial printing of an engraving layer (3) onto an ancillary backing film (2), where the engraving layer (3) is formed from a UV-curable printcoat,
and by full-surface application of an outer layer (4) above the partial engraving layer (3), in particular directly on the partial engraving layer (3), where the outer layer (4) is formed from a UV-curable printcoat and is printed above the engraving layer (3), **characterized in that**
an inverse engraving layer (11) is printed in particular onto the ancillary backing film (2), and has precise registration with a pattern that is inverse with respect to the engraving layer (3), where the inverse engraving layer (11) is formed from a UV-curable printcoat and where the engraving layer (3) and the inverse engraving layer (11) are applied with in essence the same layer thickness.

2. Process according to Claim 1, **characterized in that** above the outer layer (4) a backing (6) is applied, based on a full-surface backing layer made of an electron-beam-curing acrylate coating.

3. Process according to any of the preceding claims, **characterized in that** the engraving layer (3) and/or the inverse engraving layer (11) are formed from a plurality of layers of UV-curable printcoats.

4. Process according to any of the preceding claims, **characterized in that** above the outer layer (4) one or more further printcoat layers are printed, where these printcoat layers are formed from a UV-curable printcoat, and these printcoat layers are preferably arranged below a backing layer (6).

5. Process according to Claim 4, **characterized in that** the further printcoat layers are full-surface or partial layers.

6. Process according to any of the preceding claims, **characterized in that** the ancillary backing film (2) is full-surface printed with a printcoat layer and that the partial engraving layer (11) is printed onto this printcoat layer.

7. Process according to any of the preceding claims, **characterized in that** the ancillary backing film (2) or a printcoat layer is printed with a metallic luster layer and that the engraving layer is printed onto the metallic luster layer.

8. Process according to any of the preceding claims, **characterized in that** one or more, preferably all, of the printcoat layers are applied with a thickness of from about 0.5 µm to about 10 µm, preferably from about 1 µm to about 5 µm.

9. Process according to any of the preceding claims, **characterized in that** the partial engraving layer (3) is applied with a thickness from about 0.5 µm to about 5 µm.

10. Process according to any of the preceding claims, **characterized in that** the partial engraving layer (3) and/or an inverse engraving layer (11) is provided with a security element, in particular with UV-fluorescent pigments.

11. Process according to any of the preceding claims, **characterized in that** laser absorbers, in particular TiO₂ and/or carbon black, are admixed with the printcoat of the outer layer and/or with the printcoat of the printcoat layer.

12. Process according to any of the preceding claims, **characterized in that** the outer layer (4) is applied with a thickness of from about 1 µm to about 10 µm, preferably from about 1 µm to about 5 µm.

13. Process according to any of the preceding claims, **characterized in that** the backing layer (6) is formed with a thickness from about 50 µm to about 200 µm.

14. Multilayer, laser-inscribable film (1) obtainable by a process according to any of the preceding claims.

## Revendications

1. Procédé pour la préparation d'une feuille à plusieurs couches, inscriptible au laser (1),
dans lequel une couche à graver (3) est imprimée partiellement sur une feuille support (2), la couche à graver (3) étant formée à partir d'une laque d'impression durcissable aux UV,
dans lequel une couche de recouvrement (4) est appliquée sur toute la surface au-dessus de la couche partielle à graver (3), en particulier directement sur la couche partielle à graver (3), la couche de recouvrement (4) étant formée à partir d'une laque d'impression durcissable aux UV et imprimée au-dessus de la couche à graver (3),
**caractérisé en ce qu'**une couche à graver inversée (11) est imprimée en s'ajustant exactement avec un dessin inversé à celui de la couche à graver (3), en particulier sur la feuille support (2), la couche à graver inversée (11) étant formée à partir d'une laque d'impression durcissable aux UV et la couche à graver (3) et la couche à graver inversée (11) étant appliquées en une épaisseur de couche sensiblement concordante.

2. Procédé selon la revendication 1, **caractérisé en ce qu'**on applique, au-dessus la couche de recouvrement (4), un support (6), à base d'une couche support couvrant toute la surface en laque d'acrylate durcissant sous l'effet d'un rayon électronique.

3. Procédé selon l'une quelconque des revendications précédentes, **caractérisé en ce que** la couche à graver (3) et/ou la couche à graver inversée (11) est/sont formée(s) à partir de plusieurs couches de laques d'impression durcissables aux UV.

4. Procédé selon l'une quelconque des revendications précédentes, **caractérisé en ce qu'**on imprime au-dessus de la couche d'impression (4) une ou plusieurs couches de laque d'impression, ces couches de laque d'impression étant formées à partir d'une laque d'impression durcissable aux UV, de préférence **en ce que** ces couches de laque d'impression sont disposées sous une couche support (6).

5. Procédé selon la revendication 4, **caractérisé en ce que** les autres couches de laque d'impression sont réalisées sur toute la surface ou partie de celle-ci.

6. Procédé selon l'une quelconque des revendications précédentes, **caractérisé en ce que** le film support (2) est imprimé sur toute sa surface par une couche de laque d'impression et la couche partielle à graver (11) est imprimée sur cette couche de laque d'impression.

7. Procédé selon l'une quelconque des revendications précédentes, **caractérisé en ce que** la feuille support (2) ou une couche de laque d'impression est imprimée avec une couche à éclat métallique et **en ce que** la couche à graver est imprimée sur la couche à éclat métallique.

8. Procédé selon l'une quelconque des revendications précédentes, **caractérisé en ce qu'**une ou plusieurs, de préférence toutes les couches de laque d'impression sont appliquées en une épaisseur entre environ 0,5 µm et environ 10 µm, de préférence entre environ 1 µm et environ 5 µm.

9. Procédé selon l'une quelconque des revendications précédentes, **caractérisé en ce que** la couche partielle à graver (3) est imprimée en une épaisseur entre environ 0,5 µm et environ 5 µm.

10. Procédé selon l'une quelconque des revendications précédentes, **caractérisé en ce que** la couche partielle à graver (3) et/ou une couche à graver inversée (11) sont munies d'un élément de sécurité, en particulier des pigments à fluorescence UV.

11. Procédé selon l'une quelconque des revendications précédentes, **caractérisé en ce que** la laque d'impression de la couche de recouvrement et/ou la laque d'impression de la couche de laque d'impression est/sont mélangée(s) à un absorbant de rayons laser, en particulier le TiO₂ et/ou la suie.

12. Procédé selon l'une quelconque des revendications précédentes, **caractérisé en ce que** la couche de recouvrement (4) est appliquée en une épaisseur entre environ 1 µm et environ 10 µm, de préférence entre environ 1 µm et environ 5 µm.

13. Procédé selon l'une quelconque des revendications précédentes, **caractérisé en ce que** la couche support (6) est réalisée avec une épaisseur entre environ 50 µm et 200 µm.

14. Feuille à plusieurs couches, inscriptible au laser (1) pouvant être obtenue selon un procédé selon l'une quelconque des revendications précédentes.
